# EUROPÄISCHE PATENTSCHRIFT

(11) **EP 2 367 321 B1**
(45) Veröffentlichungstag und Bekanntmachung des Hinweises auf die Patenterteilung: **22.01.2014**
(21) Anmeldenummer: 11001869.4
(22) Anmeldetag: 07.03.2011
(51) Int. Cl.: H04L 12/28

(54) **Kommunikationssystem und -verfahren**
Communications system and method
Système et procédé de communication

(30) Priorität: 05.03.2010 EP 10002271; 05.03.2010 ES 201000299
(43) Veröffentlichungstag der Anmeldung: 21.09.2011
(73) Patentinhaber: Televés, S.A., 15706 Santiago de Compostela (ES)
(72) Erfinder: Fernandez Carnero, José Luis, 15706 Santiago de Compostela (ES); Ramos Martinez, Manuel, 15706 Santiago de Compostela (ES)
(74) Vertreter: Dosterschill, Peter

(56) Entgegenhaltungen:
- WO-A2-2008/155545
- FR-A1- 2 792 751
- US-A1- 2003 233 429
- US-A1- 2008 089 277

## Beschreibung

Die vorliegende Erfindung bezieht sich auf ein Kommunikationssystem nach dem Oberbegriff des Patentanspruchs 1 sowie auf ein Verfahren zur Steuerung eines Kommunikationssystems nach dem Oberbegriff des Patentanspruchs 9.

Die Anfänge sogenannter intelligenter Gebäude geht auf die 70er Jahre des vergangenen Jahrhunderts zurück, mit Systemen HVAC ("Heating, Ventilating and Air Conditioning"), die durch Prozessoren gesteuert wurden; jedoch war keine Integration mit anderen System vorhanden.

In den 80er Jahren des vergangenen Jahrhunderts entstand die Automatisierung von Beleuchtung, Sicherheit und Schutz, wobei es sich jedoch weiterhin um unabhängige Systeme handelte. Am Ende der 80er Jahre und zu Beginn der 90er Jahre entstand die zweite Generation intelligenter Gebäude, wobei schon die Integration der unabhängigen Systeme auf der Grundlage von Prozessoren berücksichtigt wurde, einschließlich des Einsatzes von Energie als Hauptthema.

In der jüngsten Zeit steht die Forschung der sogenannten Umweltintelligenz (Aml) im Mittelpunkt. Innerhalb dieses Paradigmas umfasst der Stand der Technik verschiedene Versuche der Anwendung von Lerntechniken hinsichtlich der Steuerung der Geräte einer Wohnung oder eines Gebäudes, auf der Basis eines nicht-intrusiven Lernens, ausgehend von Datenmustem verschiedener Sensoren und vom Status der Geräte einer Wohnung, wobei allerdings der Wohnbereich (Domotik) nicht mit dem Gebäude (Inmotik) verknüpft wird, wie dies der Fall bei der vorliegenden Erfindung der Plattform CDC (Control de Cabecera = Steuerung der Kopfeinheit) ist.

Die Anwendung des Konzept der Umweltintelligenz auf die intelligenten Gebäude ist in direkter Form verbunden mit anderen Disziplinen wie die Domotik, die definiert ist als die Integration der Informationstechnologien in Gebäuden, was zu einem Status geführt hat, der unter dem Begriff "intelligente Häuser der dritten Generation" bekannt geworden ist. Dabei ist es das Ziel, den Betrieb einiger täglich benutzter Geräte zu automatisieren, womit vermieden wird, dass der Benutzer Routineaufgaben zu erledigen hat, die grundsätzlich von einem intelligenten System erledigt werden können. Die Plattform CDC beansprucht die Innovation in diesem Sinne, mittels nicht-intrusiver Beobachtung des Verhaltens von Bewohnern der Wohnung oder von Gemeinschaftsräumen in einem mittels CDC zentralisierten System, um einerseits reagieren zu können und um andererseits vorab entsprechend deren Bedürfnisse und dem optimierten Betrieb des Gebäudes tätig werden zu können.

Die vorliegende Erfindung der Plattform CDC besteht insbesondere darin, die klassische Domotik (automatisierte Haustechnik, "Domotica") mittels verteilter intelligenter Lokalsteuerungen P in ein zentralisiertes System mittels CDC oder der Steuerung der Kopfeinheit zu integrieren, mit dem Ziel, eine für Systembenutzer angenehme Atmosphäre, eine Betriebseffizienz, eine Umgebung in Sicherheit für den Menschen (life safety) zu schaffen, eine materielle Sicherheit (security) und eine Einsparung von Energie im Gebäude.

Der Anmelder der vorliegenden Patentanmeldung verfügt bereits über Patentanmeldungen und Patente, die sich auf zentralisierte Betriebssysteme und Prozesse in der Kopfeinheit eines Gebäudes beziehen, sowie in SMATV- und MATV-Anlagen, beispielsweise das Europäische Patent EP 1182872 und die Europäische Patentanmeldung EP 1 564 996.

Weiterhin sind Systeme bekannt, die eine Überwachung bzw. Steuerung von elektrischen Einrichtungen in Gebäuden durchführen. So ist aus WO 2008/1555-45 A2 ein "off site monitoiring /control of electrical equipment" bekannt, aus US 2003/233429 A1 sind ein Verfahren und eine Vorrichtung "for programming and controlling an environment managment system" bekannt und aus US 2003/089277 A1 ist ein "centralized wireless network for multi-room large properties" bekannt.

Aus FR 2 792 751 ist ein Kommunikationssystem bekannt, das ein Telekommunikationssystem mit einer Fernsehantenne und einem Fernsehgerät sowie ein Domotik-System umfaßt. Das bekannte Kommunikationssystem weist eine Steuerung auf, die sowohl das Telekommunikationssystem als auch das Domotik-System steuert.

Der Erfindung liegt die Aufgabe zugrunde, ein System zu schaffen, das Benutzern eine größere Anzahl an Dienstleistungen bietet.

Diese Aufgabe wird erfingdungsgemäß durch ein System beziehungsweise Verfahren gelöst, das in den Ansprüchen 1 und 9 definiert ist.

Das erfindungsgemäße System zeichnet sich durch eine Vielzahl von Vorteilen aus.

Das erfindungsgemäße System bietet neben Telekommunikationsdienstleistungen weitere Dienstleistungen an, beispielsweise hinsichtlich Sicherheit, Komfort, Energiebetrieb, usw. und ermöglicht weiterhin, diese Dienste in die Telekommunikationsdienstleistungen zu integrieren bzw. mit diesen zu verknüpfen. Eine Ausführungsform des erfindungsgemäßen Systems ist dadurch gekennzeichnet, dass eine erste Steuereinheit (CDC) und eine zweite Steuereinheit (P) in der Weise ausgestaltet sind, dass Radioempfangsgeräte (TR) und/oder Fernsehempfangsgeräte (TV) in Abhängigkeit erster Signale (S1) und/oder in Abhängigkeit zweiter Signale (S2) gesteuert werden. Dabei können die ersten und/oder zweiten Signale, die als Steuersignale verwendet werden, telekommunikationsfremde Signale sein, die beispielsweise eine Außentemperatur einer Wohneinheit bezeichnen oder auch eine Fernseh-Einschaltquote von Benutzern anderer Wohneinheiten. Erfindungsgemäß werden also telekommunikationsfremde Informationen bzw. Signale zur Steuerung telekommunikationstechnischer Prozesse verwendet.

Das erfindungsgemäße Kommunikationssystem umfasst ein Telekommunikationssystem sowie ein Domotik-System, wobei Telekommunikationssystem und das Domotik-System wenigstens eine gemeinsame Komponente aufweisen. Dies ist die erste Steuereinheit CDC, gegebenenfalls auch eine oder mehrere zweite Steuereinheiten P, wobei die wenigstens eine zweite Steuereinheit P hierarchisch unterhalb der ersten Steuereinheit CDC angeordnet ist.

Eine weitere vorteilhafte Ausführungsform des erfindungsgemäßen Systems ist dadurch gekennzeichnet, dass Dateneingabegeräte und/oder optische und/oder akustische Anzeige-Einrichtungen, die Benutzern des Kommunikationssystems zugeordnet sind, weitere gemeinsame Komponenten des Telekommunikationssystems und des Domotik-Systems sind.

Das erfindungsgemäße System wird durch die Verwendung gemeinsamer Komponenten für beide Subsysteme (Telekommunikationssystem, Domotik-System), insbesondere gemeinsame Steuereinheiten (CDC, P) ertüchtigt, Prozesse, die beide Subsysteme betreffen, mittels vergleichsweise weniger Prozessschritte durchzuführen, dies im Vergleich zu der Alternative mit subsystem-indivuellen Steuereinheiten. Damit wird der Vorteil erzielt, dass die Durchführung der Prozessschritte weniger fehleranfällig und schneller gestaltet wird. Dies führt ohne weiteres zu Vorteilen für die Benutzer.

Das erfindungsgemäße System umfasst das Konzept der Plattform verteilter Intelligenz. Die Plattform verteilter Intelligenz ist in der Lage, den Status einer jeden Wohneinheit und von Gemeinschaftsbereichen von Gebäuden mittels Sensoren und Systemen, die Daten aufnehmen, zu erfassen, sie weist zum einen Lokalsteuerungen P und eine zentral angeordnete Steuereinheit beziehungsweise in einem Element einer Kopfeinheit CDC für ihre Koordination, womit ermöglicht wird, auf Medien mittels der Steuereinheiten der entsprechenden Geräte einzuwirken. Sie stellt die notwendige Funktionalität zur Verfügung, die Komfort, Sicherheit, Kommunikationen und Energiemanagement optimiert und zugleich die Kosten des Gebäudebetriebs minimiert.

Das erfindungsgemäße System kann Lokalsteuereinheiten bzw. Wohneinheitensteuereinheiten (GATE-WAYS) aufweisen. Die Intelligenz ist jeder der Lokalsteuerungen P zugeordnet und zentralisiert in der Steuerung CDC der Kopfeinheit, womit die "Umweltintelligenz" (Aml, Ambient Intelligence) ermöglicht wird, auch bekannt unter dem Begriff "intelligente Umgebungen" oder Rechnerdurchdringung ("pervasive computing") des Gebäudes.

Die vorstehend genannte intelligente Plattform ist in der Lage, den Status einer jeden Wohneinheit und von Gemeinschaftszonen von Gebäuden mittels Sensoren und Datenerfassungssystemen zu erfassen und auf das Medium einzuwirken, dies im Zusammenwirken mit Steuereinheiten der entsprechenden Geräte. Sie stellt die notwendige Funktionalität zur Verfügung, die Komfort, Sicherheit, Kommunikationen und Energiemanagement optimiert und zugleich die Kosten des Gebäudebetriebs minimiert.

Alle diese Funktionen werden in dem zentralen Element (insbesondere Kopfeinheit CE, bzw. Steuerung CDC der Kopfeinheit) koordiniert, das Techniken der Erfassung und Anpassung von Daten mittels Lokalsteuerungen verteilter Intelligenz in den Wohneinheiten implementiert, mit dem Ziel der Materialisierung der Vision der Umweltintelligenz in einem Gebäude oder in Gemeinschaftsbereichen. Die Plattform verwendet integrierte, intelligente und interaktive Schnittstellen, und berücksichtigt Anforderungen und Bedürfnisse menschlicher Handlungen, und wandelt sie um in Erweiterungen der menschlichen Möglichkeiten.

Diese Plattform ermöglicht die Implementierung intelligenter Gebäude, betont die dynamische Neukonfiguration des Raumes und die Funktionen, um Bedürfnisse der Benutzer, Komfort, Energiemanagement und Präferenzen der Benutzer zu berücksichtigen, ohne dass der Mensch einzugreifen hat.

Im Folgenden werden beispielhaft vorteilhafte Ausführungsbeispiels des Kommunikationssystems gemäß der Erfindung beschrieben.

Es zeigt
Figur 1 ein Blockschaltbild der Plattform bzw. der Kopfeinheit des erfindungsgemäßen Systems;
Figur 2 ein erstes Blockschaltbild einer zweiten Steuereinheit P;
Figur 3 ein zweites Blockschaltbild der zweiten Steuereinheit P;
Figur 4 das Zusammenwirken einer ersten Steuereinheit CDC des erfindungsgemäßen Systems; und

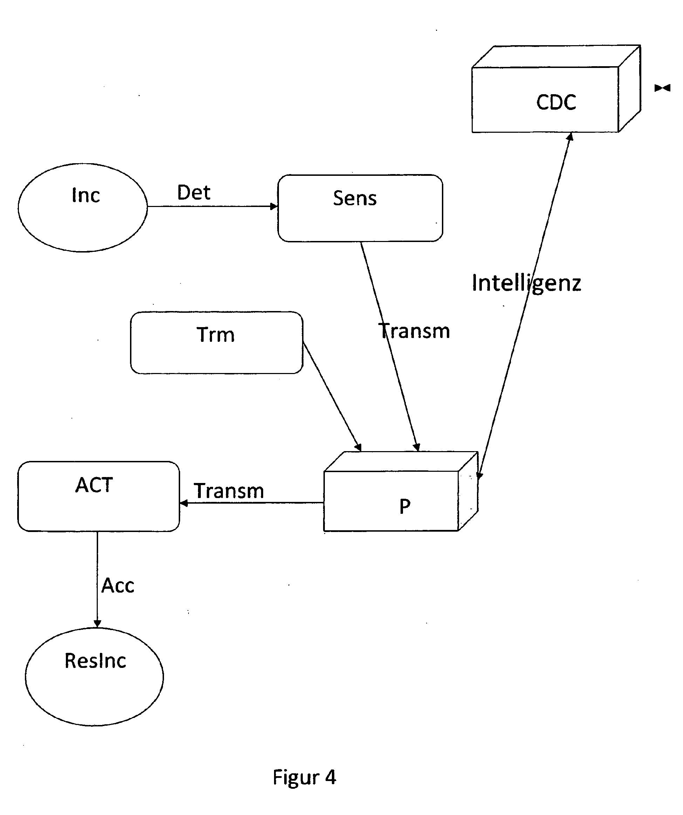

Figur 4 eine Anwendung des erfindungsgemäßen Systems in einem Hotel.

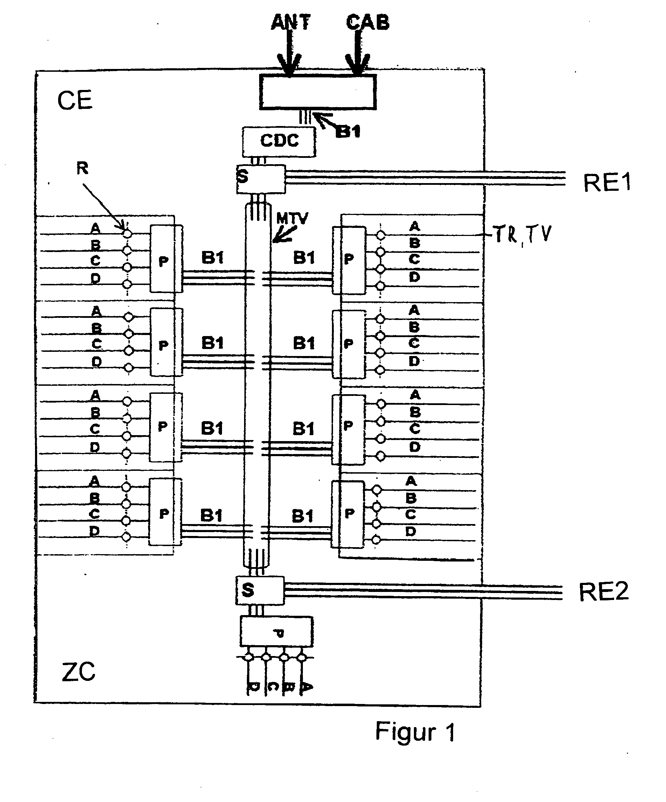

Das in Figur 1 dargestellte Kommunikationssystem besteht im Wesentlichen aus folgenden Komponenten:

| | |
|---|---|
| CE | Kopfeinheit |
| CDC | Steuereinheit der Kopfeinheit CE |
| P | Lokalsteuereinheit/Wohneinheitensteuereinheit |
| S | Schaltmittel für Übertragung |
| MTV | Mittel der vertebralen Übertragung |
| B1 | Verbindungsschnittstellen |
| R | Protokollumwandler/Domotik-Übertragungsmittel |
| A | Teleommunikationssystem |
| B | Sicherheitssystem |
| C | Multimediasystem |
| D | Inmotik-/Domotik-System |
| TR | Radioempfangsgerät |
| TV | Fernsehempfangsgerät |
| RE1 | Erstes externes Netz |
| RE2 | Zweites externes Netz |
| ZC | Gemeinschaftsbereiche (in einem Gebäude) |

Die gesamte Infrastruktur der Plattform der verteilten Intelligenz der Kopfeinheitsteuerung ist auf die mögliche Infrastruktur der Telekommunikation ICT (allgemeine Infrastruktur der Telekommunikationsdienstleistungen) abgestimmt, die ermöglicht, mittels der Telekommunikationstechnologie und der verfügbaren Information, dass der Nutzer die Dienstleistungen nutzen kann, die von der Plattform angeboten werden, die unter dem Begriff "Intelligentes Gebäude" konfiguriert sind.

Die Plattform ist gekennzeichnet durch ein verteiltes System, wobei zentrale und dezentrale Typologien kombiniert sind. Die Intelligenz ist in jeder der Lokalsteuerungen P verteilt und wird koordiniert in dem Element CDC (Steuerung der Kopfeinheit). Jede der Lokalsteuerungen hat einen physischen Zugang zu externen Netzen (Netze der Dienstbetreiber) RE1, RE2 (Figur 1) und zu den internen Elementen mittels interner Netze.

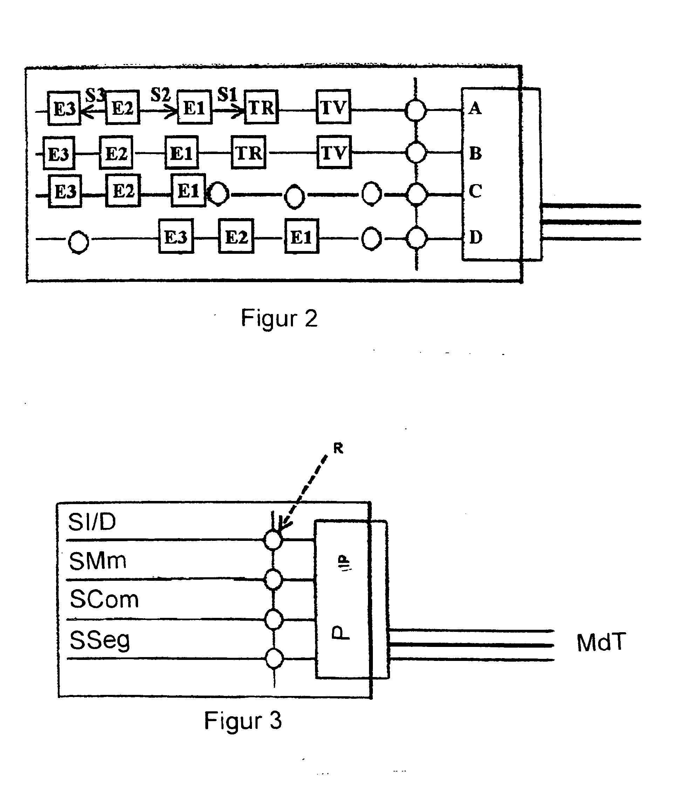

Die benutzten Übertragungsmittel (MTV, Figur 1; MdT, Figur 3) sowie die internen Netze der Wohneinheiten können mehrfach vorhanden sein (zum Beispiel Trägerströme, metallische Träger wie verflochtene Kabel, parallel und koaxial, optische Fasern, Drahtlos-Anordnungen), da sowohl die Kopfeinheit-Steuereinheit CDC als auch die Lokalsteuereinheiten Schnittstellen B1 aufweisen, um mittels diesen Übertragungsmitteln übertragen und empfangen zu können.

Eines der besten Übertragungsmittel ist die Glasfaser, die sich dadurch auszeichnet, dass große Datenmengen mit sehr hohen Geschwindigkeiten übertragen werden können.

Sowohl die Steuereinheit CDC der Kopfeinheit als auch die Lokalsteuereinheiten P können unterschiedliche Kommunikationsprotokolle verwenden, damit alle Module eine koordinierte Aktion ausführen können. Das wesentliche Protokoll ist an das Protokoll IP angelehnt, aber man verwendet auch Protokollumwandler R, die die Einbettungen des beliebigen domotischen Protokolls in das IP-Protokoll ermöglichen, so dass ermöglicht wird, unterschiedliche Protokolle für die unterschiedlichen internen Netze wie Konnex, LonWorks, BacNet, usw. zu verwenden, ohne andere, eigene Protokolle auszuschließen, die in IP eingebettet werden können.

Die Steuereinheit CDC bzw. die Plattform ermöglicht die Konfiguration oder die Art der Benutzung und des Betriebs der Plattform auf der nutzerbezogenen Ebene (Wohneinheiten, Lokalsteuereinheiten) als auch auf Gemeinschaftsebene (Gemeinschaftsbereiche ZC, Gänge, Aufzüge, usw.). Ihre hauptsächliche Funktion ist die "Umweltintelligenz" (Aml, Ambient Intelligence) zu nutzen, auch bekannt unter den Begriffen "intelligente Umgebungen" oder "pervasive computing" (Rechnerdurchdringung). Ihr Ziel ist die Schaffung von Räumen, in denen die Benutzer in natürlicher Weise zusammenwirken und ohne den Nachteil, dass unterschiedliche Systeme bedient werden müssen.

Die Steuereinheit CDC bzw. die Plattform ermöglicht es, dass die eigene zugrundeliegende Technologie an die Nutzer und ihre Umgebung anzupassen, die in autonomer Form, wobei auch die Erledigung seiner täglichen Aufgaben und die Kommunikation zwischen ihnen und der Umgebung, einschließlich des Gebäudes ermöglicht wird.

CDC implementiert Anwendungen mit der Fähigkeit zu lernen, so dass sich Vorhersagen zu den Bedürfnissen der Nutzer und des Gebäudes bilden lassen.

Die Architektur des Plattformbetriebs, mittels der Interaktion der Kopfeinheit mit den Lokalsteuerungen der unterschiedlichen Netze, stellt sich wie folgt dar, wobei die folgenden Ebenen vorgesehen sind:
I. Gebäudeanwendungen
   1. Netz
   2. Netzbetrieb
   3. Erfassung von Rauch; Evakuierung
   4. Besetzstand
   5. Energiemanagement
II. Gebäudesteuerung
   1. Energiemanagement; Bewegungsanalysen
III. Zonensteuerungen
   1. Steuerung von Temperaturen; Brände, Sicherheit, Lampen, Vorhänge
IV. Flächensteuerungen
   1. Steuerungen von Wohneinheiten; Steuerungen von Türen,
V. Sensoren, Aktuatoren
   1. Besetzzustände, Erkennen von Alarmen.

Die Plattform CDC ist nicht sichtbar, und beeinträchtigt nicht die Benutzer (es sei denn, die Benutzer wünschen eine aktive Rolle), ist auf persönliche Bedürfnisse einstellbar und kann den Benutzer erkennen, seine Gewohnheiten und Bedürfnisse, außerdem ist sie adaptiv, abhängig vom Verhalten der Person und von der Umgebung, in der sich die Person befindet.

Die Plattform CDC nutzt Computertechnologien bei der Entwicklung der Plattform, unterstützt die Tätigkeiten des täglichen Lebens in effizienter Form, beispielsweise Aktivitäten bezüglich der Steuerung der Wohneinheiten, des Energiemanagements, der Sicherheit, des Komforts, usw.

Sie hat die Fähigkeit, Szenarien zu bilden, die unter dem Begriff "Intelligente, allgegenwärtige Umgebungen" bekannt sind.

Die wichtigsten Szenarien, die die Plattform bildet, sind folgende:
Aufnahme von Daten: realisiert die Überwachung der täglichen Ereignisse und nimmt die Informationen auf, die der Umgebung jeder Lokalsteuerung zugeordnet sind, hinsichtlich des Zusammenhangs, der Benutzer und seiner Tätigkeiten.

Kontextsensible Umgebungen: die Umgebungen passen sich sowohl hinsichtlich der Umweltinformation als auch hinsichtlich der Information des Benutzers an.

Formen der Interaktion Mensch-Maschine: stellt natürliche, allgegenwärtige Schnittstellen zur Verfügung, mittels der man die Interaktion zwischen dem Benutzer und seiner Umgebung in transparenter Weise erzielt.

Automatische Führung: erkennt Benutzer in Abhängigkeit ihrer Profile, erleichtert die entsprechende Information und führt sie durch die Umgebung.

Die Ziele der Plattform CDC sind:
- Die Privatsphäre des Benutzers aufrecht zu erhalten, Datensicherheit, Freiheit und Vertrauen des Benutzers zu dem System;
- Die von den Sensoren erhaltene Information klassifizieren und priorisieren;
- Die Technologie für die Benutzer unsichtbar zu machen;
- Autonomie, Integration und Koordination der verschiedenen Geräte;
- Skalierbar zu sein.

Die Figur 3 zeigt eine Lokalsteuerung P, die das zentrale Element jeder Wohneinheit ist und die beispielsweise vier fundamentale Funktionen liefert: Kommunikationssysteme S Com, Inmotik/Domotik-System SI/D, Multimediasystem SMm und Sicherheitssystem S Seg, dies eingebettet in die vielfältigen Telekommunikationsinfrastrukturen (Daten, Steuerung, Automatisierung, usw.), die in der Wohneinheit vorhanden sind, sowohl hinsichtlich des Zugang an ein öffentliches Datennetz (zum Beispiel Internet) als auch hinsichtlich der Anwendungen der lokalen Verbindbarkeit.

Wie Figur 3 zeigt, hat die P die Aufgabe, in der Wohneinheit alle vorstehend genannten Funktionen bzw. Informationen zu integrieren, was Rahmenbedingungen mit hohen Anforderungen der Prozessabläufe und der Kommunikationskapazität darstellt.

Hinsichtlich der Komfortanwendungen (Inmotik-/Domotik-Systeme) wird es zur Überwachung und zum Betrieb der physischen Parameter benutzt, wie beispielsweise Temperatur, Feuchte, Ventilation und Beleuchtung; die Aktivierung und Deaktivierung elektrischer Hausgeräte und der Betrieb automatischer Abläufe, die architektonischen Elementen (Turbinen, Klappen, Rolladen, Markisen, ..., usw.) zugeordnet sind. Eine weitere Anwendung ist das Energiemanagement bzw. die Energieoptimierung der Wohneinheit, die in die Inmotik-/Domotik-Systeme eingebunden ist, und die in der Plattform CDC zentralisiert ist, mit dem Ziel eines optimalen Betriebs des Verbrauchs und der Produktion von Energie, in der Wohneinheit und der Gesamteinheit des Gebäudes.

Die Steuereinheit P integriert die Kommunikationssysteme der Wohneinheit und zeigt dem Endbenutzer eine Vision der Nachhaltigkeit und der der Transparenz hinsichtlich der möglichen externen Dienste und garantiert in jedem Fall die Interaktionen zwischen den verschiedenen Systemen. Lokale Applikationen senden der Steuereinheit CDC Meldungen hinsichtlich Sicherheit, Energie, usw. und erleichtert damit die Aufgaben, die sonst der Benutzer zu erledigen hat, und realisiert so die Umgebungsintelligenz der Plattform.

Außerdem führt sie eine Anpassung der Daten des internen Nutzers der Wohneinheit durch mit der Breitbandverbindung des Internets, wie zum Beispiel Anwendungen (Dienste) mit Anforderungen in Realzeit, wie dies der Fall bei der Übertragung von Telefongesprächen über das Internet oder bei Video in Realzeit ist.

Die Lokalsteuerung ist der erste Schritt, um auf fast transparente Weise für den Benutzer alle Dienste zu integrieren, die die dargestellte Plattform anbieten kann.

Die Kapazität der Lokalsteuerung, Entscheidungen zu treffen, wird festgelegt durch den Umfang der Interaktionen mit der Kopfeinheitsteuerung CDC, wobei eine anfängliche Anpassung einer Vielzahl von Parametern ermöglicht wird, um diese an die Bedürfnisse der Benutzer anzupassen Die Plattform mittels der Kopfeinheitsteuerung CDC und der Lokalsteuerung ermöglicht es, auf Personen in natürlicher Form zu reagieren und Interaktionen zu bewirken, wobei die Bedürfnisse und Präferenzen der Personen berücksichtigt werden. Die Tatsache, den Lokalsteuerungen diese Kapazität zuzuordnen, führt zu der Implementierung der sogenannten Umweltintelligenz.

Die Regelung, die ICT regelt, bestimmt Minima, beschränkt aber nicht die genannte Infrastruktur und so lassen sich Elemente bestimmen, die als Unterstützung der durch die Lokalsteuerung der Plattform CDC definierten Dienste dienen. Hierzu können die Dimensionen der Registrierungen vergrößert werden, der Durchlassgehäuse oder die Anzahl der Röhren.

Der Kern des Betriebes der Lokalsteuerung hinsichtlich des Domotik-Systems ist in Figur 4 zusammengefasst. Dabei bedeutet:

| | |
|---|---|
| CDC | Steuereinhei der Kopfeinheit |
| P | Lokalsteuereinheit/Wohneinheitensteuereinheit |
| Inc | Ereignis |
| Det | Erkennung |
| Sens | Sensor |
| Transm | Übertragung |
| Trm | Übertrager |
| Act | Aktuator, Stellglied |
| Acc | Handlung |
| Reslnc | Antwort auf Ereignis |

Wenn das System der Wohneinheiten oder der Gemeinschaftszonen mittels der Sensoren Sens ein bestimmtes Ereignis Inc erfasst, wird eine entsprechende Information Det an die Lokalsteuerung P übertragen. Die Lokalsteuereinheit P und die Steuereinheit CDC der Kopfeinheit treffen dann Entscheidungen und übertragen dann eine Serie von Steuerbefehlen an die Aktuatoren.

Die Plattform der verteilten Intelligenz bietet die Funktionalität der Überwachung sowohl des (elektrischen) Verbrauchs als auch der elektrischen Produktion einer Wohneinheit oder eines Gebäudes. Sie ermöglicht es, dem Endverbraucher die Daten des elektrischen Verbrauchs zu präsentieren, insbesondere aber mit der Besonderheit der Zentralisierung in der Kopfsteuerungseinheit CDC und eines Berichts der Information an das Unternehmen, das die elektrische Energie erzeugt oder liefert, dies mittels eines verfügbaren Kommunikationssystems.

Die Plattform der verteilten Intelligenz verfügt daher über ein aktives System des Managements der Nachfrage nach elektrischer Energie, wobei der elektrische Verbrauch aller Systeme des Gebäudes überwacht wird, einschließlich der Wohneinheiten: elektrische Hausgeräte, Beleuchtung, Kommunikationssysteme, Kühl- und/oder Heizsysteme, etc. Dies ermöglicht sowohl einen personalisierten Betrieb des elektrischen Verbrauchs (Verbrauch nach Stunden, Tagen, Monaten, etc.) sowie das Erkennen von Mängeln im Betrieb der Geräte des Gebäudes.

Die Aufgabe dieser Funktionalität ist es, für den Hersteller der Elektrizität einen möglichen Dienst zu leisten, dergestalt, dass mit größerer Präzision die Produktionsbedingungen an das Verhalten des Verbrauchs angepasst werden können. Eine weitere Aufgabe ist es, die Qualität des Bezugs elektrischer Leistung zu überwachen, wobei man dem Elektrizitätslieferanten Mitteilung machen kann, womit das globale Funktionieren des Systems der Verteilung elektrischer Energie verbessert wird.

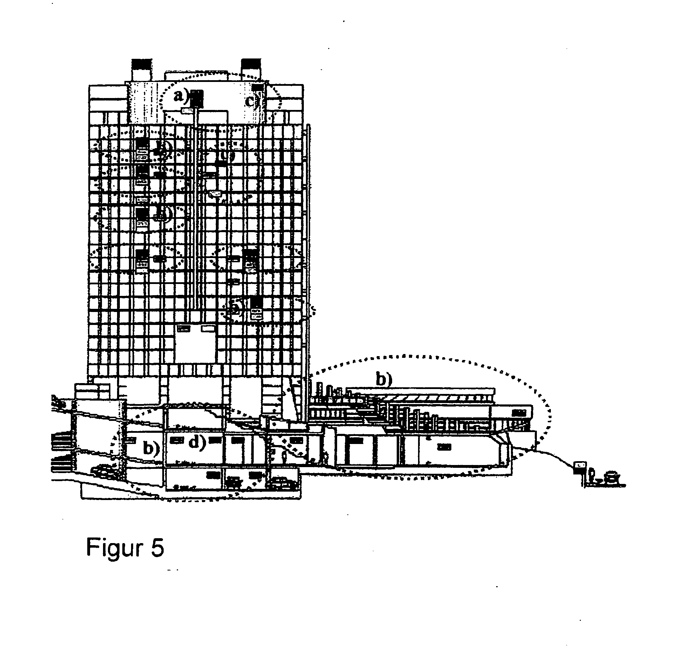

Figur 5 zeigt ein Beispiel einer Anwendung des erfindungsgemäßen Systems, wobei ein Anwendungsbeispiel der intelligenten Plattform CDC dargestellt ist, das Lokalsteuerungen im gesamten Gebäude umfasst, womit fortgeschrittene Dienste der Tätigkeit und der Telekommunikationsdienste angeboten werden, mit einer automatischen Steuerung, Überwachung, Energiemanagement und Wartung von Subsystemen oder Gebäudediensten, in optimaler und integrierter, lokaler und entfernter Form (zentralisiert und bedient durch die CDC), mit ausreichender Flexibilität, damit eine Implementierung künftiger Systeme einfach und wirtschaftlich rentabel gestaltet ist.

In einem Gebäude, wie in einem Hotel, besteht kein Gegensatz zwischen den Konzepten des Intelligenten Gebäudes und der Haustechnik; vielmehr ergänzen sich beide Konzepte vollkommen. Die Automatisierung eines Hotels kann funktionale und technische Fragen aufwerfen. Aus einem funktionellen Gesichtspunkt, welche Funktionen wie umgesetzt werden, wann (in welchem Zeitraum) sie umzusetzen sind und wie sie physisch umzusetzen sind. Aus einem technischen Gesichtspunkt wie die Normung des Systems und peripherer Elemente die Kompatibilität mit Geräten anderer Fabrikanten. Kapazität der Erweiterung (ohne großen Arbeitsaufwand) der Funktionalität und die Integration in ein bereits installiertes System.

Die Normung bezieht sich auf die Tatsache, dass ein inmotisches System eines einzelnen Gebäudes mit den physischen und logischen Elementen anderer Hersteller kompatibel ist; das heißt, entweder ein System, das spezifisch hinsichtlich eines Herstellers ist, oder ein System, das allgemein bekannt ist.

Die Normung ist wichtig, sowohl im Bereich der CDC als auch der verwendeten Lokalsteuereinheit P, sowie der peripheren Elemente E1, E2, E3 (Figur 2), die mit diesen Steuereinheiten P verbunden sind,

Die inmotische Lösung, die ein Hotel benötigt, hat eine angemessene Kombination der Automatisierung des Gebäudes und der Flexibilität zu sein, die ein inmotisches System wie die CDC ermöglicht, das wachsen kann ohne dass große Investitionen zu tätigen sind, um Sonderbedürfnisse eines jeden Hotelkunden zu erfüllen. Die CDC erzielt die maximale Harmonie des Menschen mit der Umgebung eines Hotels.

Eine Plattform wie die CDC ermöglicht mittels ihrer Eigenschaften der Systemintegration, der Normung der Übertragungsmedien und - protokolle die notwendige Flexibilität und Skalierbarkeit, so dass die beschriebene Plattform eine interessante Investition für das Hotel ist.

Dank der Plattform, die zu einer kleinen Erhöhung des Gesamtpreises des Hotels führen kann, lässt sich eine Reduzierung des Energieverbrauchs des Hotels um mehr als 20% erzielen. Die Möglichkeiten, die die Plattform bietet, sind beispielsweise die Automatisierung der Temperatur, die Möglichkeit, dass Vorhänge an den Fenstern geschlossen werden, wenn der Kunde beim Verlassen seines Zimmers seine Hotelkarte zieht, was zu einer Energieeinsparung von mehr als 20 % führen kann. Alle diese Anwendungen führen zu einer großen Energieeinsparung und sind daher wirtschaftlich, auch wenn sie sich kurzfristig nicht amortisieren.

Die Beleuchtung wird mittels der intelligenten Steuereinheit CDC implementiert, wobei das Beleuchtungssystem Leuchtkörper geringen Verbrauchs und LEDs aufweist. Es kommen Wände mit transparentem Glas zum Einsatz, die in ihrem Inneren beleuchtet sind mit LEDs, optischen Fasern und neuen rückleuchtenden bzw. reflektierten Materialien, die sozusagen in der Mitte des Weges zwischen Keramik und Glas angeordnet sind.

Die Erfindung bezieht sich auf eine Plattform CDC, die die klassische Domotik mittels lokaler Steuerungen P verteilter Intelligenz integriert, dies in einem zentralisierten System mittels der CDC- Steuerung der Kopfeinheit CE (Figur 1).

Das vorliegende erfinderische Konzept beinhaltet Szenarien, die unter dem Begriff "intelligente allgegenwärtige Umgebungen" bekannt sind, es werden Computer-Technologien in der Plattform verwendet, es werden die Tätigkeiten des täglichen Lebens unterstützt, und zwar in effizienterer Form, beispielsweise Aktivitäten im Zusammenhang mit der Steuerung von Wohneinheiten, des Energiemanagements, Sicherheit, Komfort, usw.

Im Rahmen des erfinderischen Konzepts überwacht man sowohl den Verbrauch als auch die Generierung der elektrischen Leistung einer Wohneinheit oder des Gebäudes. Es ermöglicht, dem Endverbraucher die Daten des elektrischen Verbrauchs anzuzeigen, aber mit der Besonderheit der Zentralisierung der Information in der CDC und es ermöglicht, wenn dies gewünscht ist, dem Unternehmen, das die elektrische Energie erzeugt oder liefert, Meldungen bzw. Berichte zu übermitteln, wobei diese Meldungen bzw. Berichte mittels der verfügbaren Kommunikationssysteme übertragen werden.

Die Lokalsteuereinheit P ist in der Lage, Entscheidungen zu treffen, abgestimmt auf die Interaktion mit der Steuereinheit CDC, womit schon bei Beginn von Abläufen eine Anpassung mehrerer Parameter an die Wünsche der Benutzer erfolgt. Die Plattform ermöglicht mittels der Steuereinheit CDC und der Lokalsteuereinheit P zu reagieren und Interaktionen mit den Personen in natürlicher Form zu erlangen, wobei deren Bedürfnisse und Präferenzen berücksichtigt werden.

Ein System gemäß der Erfindung ermöglicht die nachhaltige Architektur mit den folgenden Säulen:
- Optimierung der (natürlichen und künstlichen) Ressourcen;
- Verminderung der Abfälle und Emissionen;
- Verminderung des Energieverbrauchs und Nutzung der erneuerbaren Energiequellen;
- Optimierung des Wohlbefindens und der Qualität des Lebens der Benutzer;
- Ersparnis bei der Wartung und bei den Endkosten.

Die Anpassung der internen Netze der Wohneinheiten mittels der Lokalsteuereinheit P bei Verbindung mit breitbandigen vorhandenen Netzen ermöglicht beispielsweise Applikationen (Dienste) in Realzeit, wie es der Fall ist bei "Stimme über IP" oder Video in Realzeit.

Gleichzeitig wird die Plattform unabhängig von den Übertragungsmedien gestaltet, die mehrfach vorgesehen sein können, da die Steuereinheit CDC und die Lokalsteuereinheiten P Schnittstellen B1 (Figur 1) aufweisen, um übertragen und empfangen zu können, dies mittels Trägerströmen, metallischen Übertragungskörpern wie klassische verflochtene Kabel, Parallelkabel, Koaxialkabel und Glasfaser, sowohl in neuen Gebäuden als auch in renovierten bzw. wiederhergestellten Gebäuden.

Die Figuren 1,2, 3 und 4 zeigen ein Kommunikationssystem mit wenigstens einer Radioantenne ANT und/oder einer Fernsehantenne, und/oder mit wenigstens einem Kabel CAB, das Radio- und/oder Fernsehsignale an das Kommunikationssystem übermittelt; und mit Radioempfangsgeräten TR und/oder Fernsehempfangsgeräten TV, die mit wenigstens einer ersten Steuereinheit CDC und insbesondere einer nachgeschalteten zweiten Steuereinheit P verbunden sind.

Das Kommunikationssystem umfasst zum einen ein Telekommunikationssystem - mit der vorgenannten Radioantenne, der Fernsehantenne, dem Kabel und mit den vorgenannten Radioempfangsgeräten und/oder Fernsehempfangsgeräten sowie mit der wenigstens einen ersten Steuereinheit CDC - und zum anderen ein Domotik-System.

Das Telekommunikationssystem und das Domotik-System weisen mindestens eine gemeinsame Komponente auf. Dies ist die erste Steuereinheit CDC.

Eine bevorzugte Ausführungsform des erfindungsgemäßen Kommunikationssystems mit dem Telekommunikationssystem und dem Domotik-System weist mindestens eine zweite Steuereinheit P, insbesondere eine Mehrzahl zweiter Steuereinheit P, auf. Die zweiten Steuereinheiten P sind ebenfalls gemeinsame Komponenten des Telekommunikationssystems und des Domotik-Systems. Die zweite Steuereinheit P ist hierarchisch unterhalb der ersten Steuereinheit CDC angeordnet.

Weitere gemeinsame Komponenten des Telekommunikationssystems und des Domotik-Systems sind Dateneingabegeräte und/oder optische und/oder akustische Anzeige-Einrichtungen, die Benutzern des Kommunikationssystems zugeordnet sind.

Das Kommunikationssystem gemäß der Erfindung weist folgende Komponenten auf, wie auch in Figur 2 dargestellt:
- erste Komponenten (E1), insbesondere Sensoren, mit der mit ersten Steuereinheit (CDC) und/oder mit der zweiten Steuereinheit (P) verbunden sind und die erste Signale (S1) übermitteln, die chemische und/oder physikalische Zustände im Bereich von Wohneinheiten und/oder Gebäuden bezeichnen; und/oder
- zweite Komponenten (E2), die mit der ersten Steuereinheit (CDC) und/oder mit der zweiten Steuereinheit (P) verbunden sind und die zweite Signale (S2) übermitteln, die Steuerbefehle zur Steuerung des Betriebs von Einrichtungen bezeichnen, und/oder
- dritte Komponenten (E3), die mit der ersten Steuereinheit (CDC) und/oder mit der zweiten Steuereinheit (P) verbunden sind und die dritte Signale (S3) empfangen, die von der ersten Steuereinheit (CDC) und/oder von der zweiten Steuereinheit (P) übermittelt werden.

Die dritten Komponenten E3 sind beispielsweise die Radioempfangsgeräte TR und/oder die Fernsehempfangsgeräte TV.

Die erste Steuereinheit CDC und/oder die zweite Steuereinheit P bzw. die den Steuereinheiten CDC, P zugeordneten Programme sind in der Weise ausgestaltet, dass die dritten Signale S3 in Abhängigkeit der ersten Signale S1 und/oder in Abhängigkeit der zweiten Signale S2 erzeugt werden.

Die erste Steuereinheit CDC und/oder die zweite Steuereinheit P bzw. die den Steuereinheiten CDC, P zugeordneten Programme sind weiterhin in der Weise ausgestaltet, dass die Radioempfangsgeräte TR und/oder die Fernsehempfangsgeräte TR in Abhängigkeit der ersten Signale S1 und/oder in Abhängigkeit der zweiten Signale S2 gesteuert werden. Die Empfangsgeräte TR und/oder TV können daneben auch unabhängig von den Signalen S1, S2 von den Steuereinheiten CDC und/oder P gesteuert werden; in diesem Fall werden die über die Antenne ANT bzw. das Kabel CAB übermittelten Signale direkt an die Empfangsgeräte TR, TV durchgeschaltet, gegebenenfalls in Abhängigkeit von Instruktionen der Systembenutzer, welche in Dateneingabegeräte (key boards) eingegeben werden.

Das erfindungsgemäße Kommunikationssystem verwendet das Konzept der verteilten Intelligenz (Figur 4); dieses Konzept ist in den Programmen umgesetzt, das der ersten Steuereinheit CDC und den zweiten Steuereinheiten P zugeordnet ist.

In diesem Zusammenhang sind einer zweiten Steuereinheit P die ersten Komponenten E1 und/oder die zweiten Komponenten E2 und/oder die dritten Komponenten E3 zugeordnet, wobei die zweite Steuereinheit P bzw. das ihr zugeordnete Programm in der Weise ausgestaltet ist, dass sie die ersten Signale S1 und/oder die zweiten Signale S2 und/oder die dritten Signale S3 und/oder eine erste Information 11, die aus den ersten Signalen S1 und/oder den zweiten Signalen S2 und/oder den dritten Signalen S3 abgeleitet ist, an die erste Steuereinheit CDC übermittelt. Die erste Information 11 kann eine Teilmenge der Signale S1, S2 und/oder S3 beinhalten, wobei die Teilmenge nach einem ersten vorgebbaren Auswahlkatalog aus der Gesamtmenge der Signale S1, S2 und/oder S3 bestimmt wird.

In diesem Zusammenhang kann die erste Steuereinheit CDC bzw. das ihr zugeordnete Programm in der Weise ausgestaltet ist, dass Signale S1, S2 und/oder S3 und/oder eine zweite Information I2 an eine oder mehrere zweite Steuereinheiten P übermittelt werden. Die zweite Information I2 ist aus den Signalen S1, S2 und/oder S3 und/oder aus der ersten Information 11 abgeleitet. Die zweite Information I2 kann eine Teilmenge der Signale S1, S2 und/oder S3 beinhalten, wobei diese Teilmenge nach einem zweiten - oder dem ersten - Auswahlkatalog aus der Gesamtmenge der Signale S1, S2 und/oder S3 bestimmt wird. Die erste Information I1 kann gleich der zweiten Information I2 sein.

Das erfindungsgemäße Kommunikationssystem kann weiterhin in der Weise ausgestaltet sein, dass der ersten Steuereinheit CDC die Durchführung erster Prozesse zugeordnet ist und dass der zweiten Steuereinheit P die Durchführung zweiter Prozesse zugeordnet ist. Bei Ausfall der zweiten Steuereinheit P führt die erste Steuereinheit CDC mindestens einen Teil der zweiten Prozesse durch; es kann auch vorgesehen sein, dass die zweite Steuereinheit P bei Ausfall der ersten Steuereinheit CDC mindestens einen Teil der ersten Prozesse durchführt.

Die zweite Steuereinheit P ist eine Lokalsteuerung, sie ist einem Gebäudeteil, insbesondere einer Wohn-, Büro- oder Geschäftseinheit bzw. Gemeinschaftsbereichen ZC zugeordnet, wobei die Komponenten E1 (die insbesondere Sensoren sind), E2 und/oder E3 insbesondere mit der zweiten Steuereinheit P verbunden sind und in dem Gebäudeteil, insbesondere in der Wohn-, Büro- oder Geschäftseinheit angeordnet. Die Komponenten E1, hier Sensoren. können auch außerhalb der vorstehend genannten Lokalitäten angeordnet sein, ein Beispiel sind Außenthermometer, die einer Wohneinheit, außen an einem Fenster, zugeordnet sind.

Die Radioempfangsgeräte TR und/oder die Fernsehempfangsgeräte TV sind mit der zweiten Steuereinheit P verbunden, wobei die zweite Steuereinheit P die Geräte TR und/oder TV steuert. Diese Steuerung der Radioempfangsgeräte TR und/oder der Fernsehempfangsgeräte TV kann dabei in Abhängigkeit der von den ersten Komponenten E1 erzeugten ersten Signale S1 erfolgen. Beispielsweise ist eine erste Komponente E1 ein Außenthermometer, das ein erstes Signal S1 erzeugt, das eine Temperatur bezeichnet. Das erste Signal S1, oder ein aus S1 abgeleitetes Signal, wird bei diesem Beispiel als Steuersignal für die Steuerung eines Fernsehempfangsgeräts TV verwendet. So kann vorgesehen sein, dass bei relativ tiefen Außentemperaturen, zum Beispiel unter O° Celsius, das Fernsehempfangsgerät TV in der Weise gesteuert wird, dass der Benutzer vorrangig auf Fernsehprogramme hingewiesen wird, die Themen betreffen, die hohe Temperaturen betreffen, zum Beispiel Urlaub in den Tropen. Das Signal S1 ist ein "telekommunikationsfremdes" Signal, das für die Steuerung eines Telekommunikationsprozesses (hier: Aktivierung eines Fernsehempfangsgeräts) verwendet wird.

Ein weiteres Beispiel betrifft das Fernsehprogramm-Verhalten von Benutzern in demjenigen Bereich des Gebäudes, der einer Lokalsteuereinheit Px zugeordnet ist. Ein vorgebbarer Prozentsatz dieser Benutzer hat ein Fernsehprogramm gewählt, das eine bestimmte Sportveranstaltung (z.B. Fußball-Länderspiel) betrifft. Die Lokalsteuereinheit Px übermittelt diese Information an die Zentralsteuereinheit CDC, die wiederum diese Information an die Lokalsteuereinheiten Px+1, Px+2, usw. übermittelt. Diese Information wird als Steuersignal für die Fernsehempfangsgeräte verwendet, die den Lokalsteuereinheiten Px-1, Px+2, usw. zugeordnet sind.

Die Komponenten E1, E2 und/oder E3 können auch mit der ersten Steuereinheit CDC verbunden sein.

Die Erfindung betrifft auch ein Verfahren zur Steuerung des vorstehend beschriebenen Kommunikationssystems. Die wenigstens erste Steuereinheit CDC steuert sowohl das Telekommunikationssystem als auch das Domotik-System. Insbesondere steuert zusätzlich auch mindestens eine zweite Steuereinheit P das Telekommunikationssystem und das Domotik-System.

Die ersten Komponenten E1, die insbesondere Sensoren sind, übermitteln erste Signale S1, die chemische und/oder physikalische Zustände im Bereich von Wohneinheiten und/oder Gebäuden bezeichnen.

Die zweiten Komponenten E2 übermitteln zweite Signale S2, die Steuerbefehle zur Steuerung des Betriebs von Einrichtungen bezeichnen.

Die dritten Komponenten E3 empfangen dritte Signale S3, die von der ersten Steuereinheit CDC und/oder von der zweiten Steuereinheit P übermittelt werden, wobei die dritten Komponenten E3 insbesondere Radioempfangsgeräte TR und/oder Fernsehempfangsgeräte TV sind. Die dritten Komponenten E3 können auch Hausgeräte sein.

Insbesondere übermittelt die erste Steuereinheit CDC und/oder die zweite Steuereinheit P die dritten Signale S3 an die dritten Komponenten E3.

Insbesondere steuert die erste Steuereinheit CDC und/oder die zweite Steuereinheit P die Geräte TR und/oder TV in Abhängigkeit der ersten Signale S1 und/oder in Abhängigkeit der zweiten Signale S2.

Insbesondere übermittelt eine zweite Steuereinheit P die Signale S1, S2 und/oder S3 und/oder schon vorstehend beschriebene erste Information 11, an die erste Steuereinheit CDC.

Es kann auch vorgesehen sein, dass die erste Steuereinheit CDC die Signale S1, S2 und/oder S3 und/oder die schon vorstehend beschriebene zweite Information I2 an eine (weitere) zweite Steuereinheit P des Kommunikationssystems.

Das erfindungsgemäße Verfahren kann weiterhin in der Weise ausgestaltet sein, dass der ersten Steuereinheit CDC die Durchführung erster Prozesse zugeordnet ist und dass der zweiten Steuereinheit P die Durchführung zweiter Prozesse zugeordnet ist. Bei Ausfall der zweiten Steuereinheit P führt die erste Steuereinheit CDC mindestens einen Teil der zweiten Prozesse durch; es kann auch vorgesehen sein, dass die zweite Steuereinheit P bei Ausfall der ersten Steuereinheit CDC mindestens einen Teil der ersten Prozesse durchführt.

Insbesondere steuert die zweite Steuereinheit P, die einem Gebäudeteil, insbesondere einer Wohn-, Büro- oder Geschäftseinheit zugeordnet ist, die Radioempfangsgeräte TR und/oder die Fernsehempfangsgeräte TV, gegebenenfalls auch Hausgeräte.

Der in der vorstehenden Beschreibung verwendete Begriff "Domotik" bezieht sich auch auf "Inmotik, ebenso bezieht sich der in der vorstehenden Beschreibung verwendete Begriff "Inmotik" auf "Domotik".

Die Steuereinheiten CDC und P steuern Prozesse des Telekommunikationssystems und des Domotik-Systems, die beide das erfindungsgemäße Kommunikationssystem bilden.

### Bezugszeichenliste

- CDC: Steuerung der Kopfeinheit, erste Steuereinheit
- P: Lokaisteuerung/Wohneinheitensteuerung, zweite Steuereinheit
- S: Schaltmittel für Übertragung
- MTV, MdT: Mittel der vertebralen ("Rückgrat"-)Übertragung
- B1: Verbindungsschnittstellen
- R: Protokollumwandler/Domotik-Übertragungsmittel
- A, SCom: Telekommunikationssystem
- B, SSeg: Sicherheitssystem
- C, SMm: Multimediasystem
- D: Domotik-/Inmotiksystem
- ANT: Antenne
- CAB: Kabel
- CE: Kopfeinheit eines Gebäudes
- ZC: Gemeinschaftsbereiche in einem Gebäude
- RE1, RE2: Externe Netze
- TR: Radioempfangsgeräte
- TV: Fernsehempfangsgeräte
- E1: Erste Komponenten
- E2: Zweite Komponenten
- E3: Dritte Komponenten
- S1: Erste Signale
- S2: Zweite Signale
- S3: Dritte Signale
- Inc: Ereignis
- Det: Erkennung
- Sens: Sensor
- Transm: Übertragung
- Trm: Übertrager
- Act: Aktuator, Stellglied
- Acc: Handlung
- Reslnc: Antwort auf Ereignis

## Patentansprüche

1. Kommunikationssystem mit
- wenigstens einer Fernsehantenne und mit wenigstens einem Femsehempfangsgerät (TV), das mit einer ersten Steuereinheit (CDC) verbunden ist;
- wobei das Kommunikationssystem ein Telekommunikationssystem mit der Fernsehantenne, dem wenigstens einen Fernsehempfangsgerät (TV) und der ersten Steuereinheit (CDC) sowie ein Domotik-System umfaßt,
- wobei das Telekommunikationssystem und das Domotik-System wenigstens eine gemeinsame Komponente aufweisen,
- wobei die erste Steuereinheit (CDC) eine gemeinsame Komponente des Telekommunikationssystems und des Domotik-Systems ist,
- wobei das Kommunikationssystem erste Komponenten (E1, E3) aufweist, insbesondere Sensoren, die mit der ersten Steuereinheit (CDC) verbunden sind der und die erste Signale (S1) übermitteln, die chemische und/oder physikalische Zustände im Bereich von Wohneinheiten und/oder Gebäuden bezeichnen, oder die dritte Signale (S3) empfangen, die von der ersten Steuereinheit (CDC) übermittelt werden,
**dadurch gekennzeichnet,**
- **dass** die erste Steuereinheit (CDC) und eine zweite Steuereinheit (P) gemeinsame Komponenten des. Telekommunikationssystems und des Domotik-Systems sind,
- **dass** die ersten Komponenten (E1, E3) mit der ersten Steuereinheit (CDC) und/oder mit der zweiten Steuereinheit (P) verbunden sind,
- **dass** das Kommunikationssystem zweite Komponenten (E2) aufweist, die mit der ersten Steuereinheit (CDC) und/oder mit der zweiten Steuereinheit (P) verbunden sind und die zweite Signale (S2) übermitteln, die Steuerbefehle zur Steuerung des Betriebs von Einrichtungen bezeichnen, und
- **dass** die erste Steuereinheit (CDC) und/oder die zweite Steuereinheit (P) in der Weise ausgestattet sind/ist, dass die dritten Signale (S3) in Abhängigkeit der ersten Signale (S1) und/oder in Abhängigkeit der zweiten Signale (S2) erzeugt werden.

2. Kommunikationssystem nach Anspruch 1, **dadurch gekennzeichnet, dass** die zweite Steuereinheit (P) hierarchisch unterhalb der ersten Steuereinheit (CDC) angeordnet ist.

3. Kommunikationssystem nach einem der vorstehenden Ansprüche, **dadurch gekennzeichnet, dass** das Kommunikationssystem wenigstens eine Radioantenne (ANT) aufweist und dass ein Teil der ersten Komponenten (E3) Radio-empfangsgeräte (TR) und/oder Fernsehempfangsgeräte (TV) sind.

4. Kommunikationssystem nach Anspruch 3, **dadurch gekennzeichnet, dass** die erste Steuereinheit (CDC) und/oder die zweite Steuereinheit (P) in der Weise ausgestaltet sind/ist, dass die Radioempfangsgeräte (TR) und/oder die Femsehempfangsgeräte (TV) in Abhängigkeit der ersten Signale (S1) und/oder in Abhängigkeit der zweiten Signale (S2) gesteuert werden.

5. Kommunikationssystem nach einem der vorstehenden Ansprüche, **dadurch gekennzeichnet, dass** die zweite Steuereinheit (P) in der Weise ausgestaltet ist, dass sie erste Signale (S1) und/oder zweite Signale (S2) und/oder dritte Signale (S3) und/oder eine erste Information (I1), die aus den ersten Signalen (S1) und/oder den zweiten Signalen (S2) und/oder den dritten Signalen (S3) abgeleitet ist, an die erste Steuereinheit (CDC) übermittelt.

6. Kommunikationssystem nach Anspruch 5, **dadurch gekennzeichnet, dass** die erste Steuereinheit (CDC) in der Weise ausgestaltet ist, dass sie die ersten Signale (S1) und/oder die zweiten Signale (S2) und/oder die dritten Signale (S3) und/oder eine zweite Information (I2), die aus den ersten Signalen (S1) und/oder den zweiten Signalen (S2) und/oder den dritten Signalen (S3) und/oder aus der ersten Information (11) abgeleitet ist, an die zweite Steuereinheit (P) des Kommunikationssystems übermittelt.

7. Kommunikationssystem nach einem der vorstehenden Ansprüche, **dadurch gekennzeichnet, dass** der ersten Steuereinheit (CDC) die Durchführung erster Prozesse zugeordnet ist, dass der zweiten Steuereinheit (P) die Durchführung zweiter Prozesse zugeordnet ist, dass die erste Steuereinheit (CDC) bei Ausfall der zweiten Steuereinheit (P) mindestens einen Teil der zweiten Prozesse durchführt, und/oder dass die zweite Steuereinheit (P) bei Ausfall der ersten Steuereinheit (CDC) mindestens einen Teil der ersten Prozesse durchführt.

8. Kommunikationssystem nach einem der Ansprüche 2 bis 7, **dadurch gekennzeichnet, dass** die zweite Steuereinheit (P) einem Gebäudeteil, insbesondere einer Wohn-, Büro- oder Geschäftseinheit zugeordnet ist, dass die ersten Komponenten (E1), die Sensoren sind, die mit der zweiten Steuereinheit (P) und/oder mit der ersten Steuereinheit (CDC) verbunden sind, in dem Gebäudeteil, insbesondere in der Wohn-, Büro- oder Geschäftseinheit angeordnet sind, dass die Radio-empfangsgeräte (TR) und/oder die Fernsehempfangsgeräte (TV) mit der zweiten Steuereinheit (P) verbunden sind, und dass die zweite Steuereinheit (P) die Radio-empfangsgeräte (TR) und/oder die Fernsehempfangsgeräte (TV) steuert.

9. Verfahren zur Steuerung eines Kommunikationssystems mit
- wenigstens einer Fernsehantenne und mit wenigstens einem Fernsehempfangsgerät (TV), das mit einer ersten Steuereinheit (CDC) verbunden ist;
- wobei das Kommunikationssystem ein Telekommunikationssystem mit der Fernsehantenne, dem wenigstens einen Fernsehempfangsgerät (TV) und der ersten Steuereinheit (CDC) sowie ein Domotik-System umfaßt,
- wobei das Telekommunikationssystem und das Domotik-System wenigstens eine gemeinsame Komponente aufweisen,
- wobei die erste Steuereinheit (CDC) eine gemeinsame Komponente des Telekommunikationssystems und des Domotik-Systems ist,
- wobei das Kommunikationssystem erste Komponenten (E1, E3) aufweist, insbesondere Sensoren, die mit der ersten Steuereinheit (CDC) verbunden sind und die erste Signale (S1) übermitteln, die chemische und/oder physikalische Zustände im Bereich von Wohneinheiten und/oder Gebäuden bezeichnen, oder die dritte Signale (S3) empfangen, die von der ersten Steuereinheit (CDC) übermittelt werden,
**dadurch gekennzeichnet,**
- **dass** die erste Steuereinheit (CDC) und eine zweite Steuereinheit (P) das Telekommunikationssystem und das Domotik-System steuern,
- **dass** die erste Steuereinheit (CDC) und eine zweite Steuereinheit (P) gemeinsame Komponenten des Telekommunikationssystems und des Domotik-Systems sind,
- **dass** die ersten Komponenten (E1, E3) mit der ersten Steuereinheit (CDC) und/oder mit der zweiten Steuereinheit (P) verbunden sind,
- **dass** zweite Komponenten (E2) des Kommunikationssystems, die mit der ersten Steuereinheit (CDC) und/oder mit der zweiten Steuereinheit (P) verbunden sind, zweite Signale (S2) übermitteln, die Steuerbefehle zur Steuerung des Betriebs von Einrichtungen bezeichnen, und
- **dass** die erste Steuereinheit (CDC) und/oder die zweite Steuereinheit (P) in der Weise ausgestaltet sind/ist, dass die dritten Signale (S3) in Abhängigkeit der ersten Signale (S1) und/oder in Abhängigkeit der zweiten Signale (S2) erzeugt werden.

10. Verfahren nach Anspruch 9, **dadurch gekennzeichnet, dass** das die zweite Steuereinheit (P) hierarchisch unterhalb der ersten Steuereinheit (CDC) angeordnet ist.

11. Verfahren nach Anspruch 9 oder 10, **dadurch gekennzeichnet, dass** das Kommunikationssystem wenigstens eine Radioantenne (ANT) aufweist und dass die dritten Komponenten (E3) Radioempfangsgeräte (TR) und/oder Fernsehempfangsgeräte (TV) sind.

12. Verfahren nach einem der Ansprüche 9 bis 11, **dadurch gekennzeichnet, dass** die erste Steuereinheit (CDC) und/oder die zweite Steuereinheit (P) die Radio-empfangsgeräte (TR) und/oder die Fernsehempfangsgeräte (TV) in Abhängigkeit der ersten Signale (S1) und/oder in Abhängigkeit der zweiten Signale (S2) steuert.

13. Verfahren nach einem der Ansprüche 9 bis 12, **dadurch gekennzeichnet, dass** die zweite Steuereinheit (P) erste Signale (S1) und/oder zweite Signale (S2) und/oder dritte Signale (S3) und/oder eine erste Information (I1), die aus den ersten Signalen (S1) und/oder den zweiten Signalen (S2) und/oder den dritten Signalen (S3) abgeleitet ist, an die erste Steuereinheit (CDC) übermittelt.

14. Verfahren nach einem der Ansprüche 9 bis 13, **dadurch gekennzeichnet, dass** die erste Steuereinheit (CDC) die ersten Signale (S1) und/oder die zweiten Signale (S2) und/oder die dritten Signale (S3) und/oder eine zweite Information (I2), die aus den ersten Signalen (S1) und/oder den zweiten Signalen (S2) und/oder den dritten Signalen (S3) und/oder aus der ersten Information (I1) abgeleitet ist, an die zweite Steuereinheit (P) des Kommunikationssystems übermittelt.

15. Verfahren nach einem der Ansprüche 9 bis 14, **dadurch gekennzeichnet, dass** der ersten Steuereinheit (CDC) die Durchführung erster Prozesse zugeordnet ist, dass der zweiten Steuereinheit (P) die Durchführung zweiter Prozesse zugeordnet ist, dass die erste Steuereinheit (CDC) bel Ausfall der zweiten Steuereinheit (P) mindestens einen Teil der zweiten Prozesse durchführt, und/oder dass die zweite Steuereinheit (P) bei Ausfall der ersten Steuereinheit (CDC) mindestens einen Teil der ersten Prozesse durchführt.

16. Verfahren nach einem der Ansprüche 9 bis 15, **dadurch gekennzeichnet, dass** die zweite Steuereinheit (P) einem Gebäudeteil, insbesondere einer Wohn-, Büro- oder Geschäftseinheit zugeordnet ist, dass die ersten Komponenten (E1), insbesondere Sensoren, die mit der zweiten Steuereinheit (P) und/oder mit der ersten Steuereinheit (CDC) verbunden sind, in dem Gebäudeteil, insbesondere in der Wohn-, Büro- oder Geschäftseinheit angeordnet sind, dass die Radioempfangsgeräte (TR) und/oder die Fernsehempfangsgeräte (TV) mit der zweiten Steuereinheit (P) verbunden sind, und dass die zweite Steuereinheit (P) die Radioempfangsgeräte (TR) und/oder die Fernsehempfangsgeräte (TV) steuert.

## Claims

1. Communications system having
- at least one television antenna and having at least one television receiver (TV) which is connected to a first control unit (CDC);
- wherein the communications system comprises a telecommunications system having the television antenna, the at least one television receiver (TV) and the first control unit (CDC) and a domotics system,
- wherein the telecommunications system and the domotics system have at least one common component,
- wherein the first control unit (CDC) is a common component of the telecommunications system and of the domotics system,
- wherein the communications system has first components (E1, E3), in particular sensors, which are connected to the first control unit (CDC) and which transmit first signals (S1) which denote chemical and/or physical states in the domain of housing units and/or buildings, or which receive third signals (S3) which are transmitted by the first control unit (CDC),
**characterised in that**
- the first control unit (CDC) and a second control unit (P) are common components of the telecommunications system and of the domotics system,
- the first components (E1, E3) are connected to the first control unit (CDC) and/or to the second control unit (P),
- the communications system has second components (E2) which are connected to the first control unit (CDC) and/or to the second control unit (P) and which transmit second signals (S2) which denote control commands for controlling the operation of devices, and
- the first control unit (CDC) and/or the second control unit (P) is/are configured in such a manner that the third signals (S3) are generated in dependence upon the first signals (S1) and/or in dependence upon the second signals (S2).

2. Communications system as claimed in claim 1, **characterised in that** the second control unit (P) is arranged, in terms of hierarchy, beneath the first control unit (CDC).

3. Communications system as claimed in any one of the preceding claims, **characterised in that** the communications system has at least one radio antenna (ANT), and some of the first components (E3) are radio receivers (TR) and/or television receivers (TV).

4. Communications system as claimed in claim 3, **characterised in that** the first control unit (CDC) and/or the second control unit (P) is/are configured in such a manner that the radio receivers (TR) and/or the television receivers (TV) are controlled in dependence upon the first signals (S1) and/or in dependence upon the second signals (S2).

5. Communications system as claimed in any one of the preceding claims, **characterised in that** the second control unit (P) is configured in such a manner that it transmits first signals (S1) and/or second signals (S2) and/or third signals (S3) and/or a first piece of information (I1), which is derived from the first signals (S1) and/or the second signals (S2) and/or the third signals (S3), to the first control unit (CDC).

6. Communications system as claimed in claim 5, **characterised in that** the first control unit (CDC) is configured in such a manner that it transmits the first signals (S1) and/or the second signals (S2) and/or the third signals (S3) and/or a second piece of information (12), which is derived from the first signals (S1) and/or the second signals (S2) and/or the third signals (S3) and/or from the first piece of information (I1), to the second control unit (P) of the communications system.

7. Communications system as claimed in any one of the preceding claims, **characterised in that** the implementation of first processes is allocated to the first control unit (CDC), the implementation of second processes is allocated to the second control unit (P), in the event of a malfunction of the second control unit (P) the first control unit (CDC) implements at least some of the second processes, and/or in the event of a malfunction of the first control unit (CDC) the second control unit (P) implements at least some of the first processes.

8. Communications system as claimed in any one of claims 2 to 7, **characterised in that** the second control unit (P) is allocated to a part of the building, in particular a housing unit, office unit or business unit, the first components (E1) which are sensors and which are connected to the second control unit (P) and/or to the first control unit (CDC) are arranged in the part of the building, in particular in the housing unit, office unit or business unit, the radio receivers (TR) and/or the television receivers (TV) are connected to the second control unit (P), and the second control unit (P) controls the radio receivers (TR) and/or the television receivers (TV).

9. Method for controlling a communications system, having
- at least one television antenna and having at least one television receiver (TV) which is connected to a first control unit (CDC);
- wherein the communications system comprises a telecommunications system having the television antenna, the at least one television receiver (TV) and the first control unit (CDC) and a domotics system,
- wherein the telecommunications system and the domotics system have at least one common component,
- wherein the first control unit (CDC) is a common component or the telecommunications system and of the domotics system,
- wherein the communications system has first components (E1, E3), in particular sensors, which are connected to the first control unit (CDC) and which transmit first signals (S1) which denote chemical and/or physical states in the domain of housing units and/or buildings, or which receive third signals (S3) which are transmitted by the first control unit (CDC),
**characterised in that**
- the first control unit (CDC) and a second control unit (P) control the telecommunications system and the domotics system,
- the first control unit (CDC) and a second control unit (P) are common components of the telecommunications system and of the domotics system, the first components (E1, E3) are connected to the first control unit (CDC) and/or to the second control unit (P),
- second components (E2) of the communications system which are connected to the first control unit (CDC) and/or to the second control unit (P) transmit second signals (S2) which denote control commands for controlling the operation of devices, and
- the first control unit (CDC) and/or the second control unit (P) is/are configured in such a manner that the third signals (S3) are generated in dependence upon the first signals (S1) and/or in dependence upon the second signals (S2).

10. Method as claimed in claim 9, **characterised in that** the second control unit (P) is arranged, in terms of hierarchy, beneath the first control unit (CDC).

11. Method as claimed in claim 9 or 10, **characterised in that** the communications system has at least one radio antenna (ANT), and the third components (E3) are radio receivers (TR) and/or television receivers (TV).

12. Method as claimed in any one of claims 9 to 11, **characterised in that** the first control unit (CDC) and/or the second control unit (P) controls the radio receivers (TR) and/or the television receivers (TV) in dependence upon the first signals (S1) and/or in dependence upon the second signals (S2).

13. Method as claimed in any one of claims 9 to 12, **characterised in that** the second control unit (P) transmits first signals (S1) and/or second signals (S2) and/or third signals (S3) and/or a first piece of information (I1), which is derived from the first signals (S1) and/or the second signals (S2) and/or the third signals (S3), to the first control unit (CDC).

14. Method as claimed in any one of claims 9 to 13, **characterised in that** the first control unit (CDC) transmits the first signals (S1) and/or the second signals (S2) and/or the third signals (S3) and/or a second piece of information (12), which is derived from the first signals (S1) and/or the second signals (S2) and/or the third signals (S3) and/or from the first piece of information (I1), to the second control unit (P) of the communications system.

15. Method as claimed in any one of claims 9 to 14, **characterised in that** the implementation of first processes is allocated to the first control unit (CDC), the implementation of second processes is allocated to the second control unit (P), in the event of a malfunction of the second control unit (P) the first control unit (CDC) implements at least some of the second processes, and/or in the event of a malfunction of the first control unit (CDC) the second control unit (P) implements at least some of the first processes.

16. Method as claimed in any one of claims 9 to 15, **characterised in that** the second control unit (P) is allocated to a part of the building, in particular a housing unit, office unit or business unit, the first components (E1), in particular sensors, which are connected to the second control unit (P) and/or to the first control unit (CDC) are arranged in the part of the building, in particular in the housing unit, office unit or business unit, the radio receivers (TR) and/or the television receivers (TV) are connected to the second control unit (P), and the second control unit (P) controls the radio receivers (TR) and/or the television receivers (TV).

## Revendications

1. Système de communication comportant:
- au moins une antenne de télévision et comportant au moins un appareil récepteur de télévision (TV), qui est relié à une première unité de commande (CDC) ;
- le système de communication comprenant un système de télécommunication avec l'antenne de télévision, l'au moins un appareil récepteur de télévision (TV) et la première unité de commande (CDC) ainsi qu'un système domotique,
- le système de télécommunication et le système domotique présentant au moins un composant commun,
- la première unité de commande (CDC) étant un composant commun du système de télécommunication et du système domotique,
- le système de communication présentant des premiers composants (E1, E3), en particulier des capteurs, qui sont reliés à la première unité de commande (CDC) et qui transmettent des premiers signaux (S1), qui désignent des états chimiques et/ou physiques dans le domaine d'unités d'habitation et/ou de bâtiments, ou qui reçoivent des troisièmes signaux (S3) qui sont transmis par la première unité de commande (CDC),
**caractérisé par le fait que**
- la première unité de commande (CDC) et une seconde unité de commande (P) sont des composants communs du système de télécommunication et du système domotique, que
- les premiers composants (E1, E3) sont reliés à la première unité de commande (CDC) et/ou à la seconde unité de commande (P), que
- le système de communication présente des seconds composants (E2), qui sont reliés à la première unité de commande (CDC) et/ou à la seconde unité de commande (P) et qui transmettent des seconds signaux (S2) qui désignent des instructions de commande pour la commande du fonctionnement d'équipements, et que
- la première unité de commande (CDC) et/ou la seconde unité de commande (P) est/sont configuré(s) de telle manière que les troisièmes signaux (S3) sont générés en fonction des premiers signaux (S1) et/ou en fonction des seconds signaux (S2).

2. Système de communication selon la revendication 1, **caractérisé par le fait que** la seconde unité de commande (P) est disposée de manière hiérarchique sous la première unité de commande (CDC).

3. Système de communication selon l'une des revendications précédentes, **caractérisé par le fait que** le système de communication présente au moins une antenne radio (ANT) et qu'une partie des premiers composants (E3) sont des appareils récepteurs de radio (TR) et/ou des appareils récepteurs de télévision (TV).

4. Système de communication selon la revendication 3, **caractérisé par le fait que** la première unité de commande (CDC) et/ou la seconde unité de commande (P) est/sont configuré(s) de telle manière que les appareils récepteurs de radio (TR) et/ou les appareils récepteurs de télévision (TV) sont commandés en fonction des premiers signaux (S1) et/ou en fonction des seconds signaux (S2).

5. Système de communication selon l'une des revendications précédentes, **caractérisé par le fait que** la seconde unité de commande (P) est configurée de telle sorte qu'elle transmet à la première unité de commande (CDC) des premiers signaux (S1) et/ou des seconds signaux (S2) et/ou des troisièmes signaux (S3) et/ou une première information (I1), qui est déduite des premiers signaux (S1) et/ou des seconds signaux (S2) et/ou des troisièmes signaux (S3).

6. Système de communication selon la revendication 5, **caractérisé par le fait que** la première unité de commande (CDC) est configurée de telle sorte qu'elle transmet à la seconde unité de commande (P) du système de communication les premiers signaux (S1) et/ou les seconds signaux (S2) et/ou les troisièmes signaux (S3) et/ou une seconde information (I2), qui est déduite des premiers signaux (S1) et/ou des seconds signaux (S2) et/ou des troisièmes signaux (S3) et/ou de la première information (I1).

7. Système de communication selon l'une des revendications précédentes, **caractérisé par le fait que** l'exécution de premiers processus est attribuée à la première unité de commande (CDC), que l'exécution de seconds processus est attribuée à la seconde unité de commande (P), que la première unité de commande (CDC), en cas de défaillance de la première unité de commande (P), exécute au moins une partie des seconds processus, et/ou que la seconde unité de commande (P) exécute, en cas de défaillance de la première unité de commande (CDC), au moins une partie des premiers processus.

8. Système de communication selon l'une des revendications 2 à 7, **caractérisé par le fait que** la seconde unité de commande (P) est attribuée à une partie de bâtiment, en particulier à une unité d'habitation, de bureau ou commerciale, que les premiers composants (E1), qui sont des capteurs, qui sont reliés à la seconde unité de commande (P) et/ou à la première unité de commande (CDC), sont disposés dans la partie de bâtiment, en particulier dans l'unité d'habitation, de bureau ou commerciale, que les appareils récepteurs de radio (TR) et/ou les appareils récepteurs de télévision (TV) sont reliés à la seconde unité de commande (P), et que la seconde unité de commande (P) commande les appareils récepteurs de radio (TR) et/ou les appareils récepteurs de télévision (TV).

9. Procédé de commande d'un système de communication comportant :
- au moins une antenne de télévision et comportant au moins un appareil récepteur de télévision (TV), qui est relié à une première unité de commande (CDC) ;
- le système de communication comprenant un système de télécommunication avec l'antenne de télévision, l'au moins un appareil récepteur de télévision (TV) et la première unité de commande (CDC) ainsi qu'un système domotique,
- le système de télécommunication et le système domotique présentant au moins un composant commun,
- la première unité de commande (CDC) étant un composant commun du système de télécommunication et du système domotique,
- le système de communication présentant des premiers composants (E1, E3), en particulier des capteurs, qui sont reliés à la première unité de commande (CDC) et qui transmettent des premiers signaux (S1), qui désignent des états chimiques et/ou physiques dans le domaine d'unités d'habitation et/ou de bâtiments, ou qui reçoivent des troisièmes signaux (S3) qui sont transmis par la première unité de commande (CDC),
**caractérisé par le fait que**
- la première unité de commande (CDC) et une seconde unité de commande (P) commandent le système de télécommunication et le système domotique, que
- la première unité de commande (CDC) et une seconde unité de commande (P) sont des composants communs du système de télécommunication et du système domotique, que
- les premiers composants (E1, E3) sont reliés à la première unité de commande (CDC) et/ou à la seconde unité de commande (P), que
- des seconds composants (E2) du système de communication, qui sont reliés à la première unité de commande (CDC) et/ou à la seconde unité de commande (P), transmettent des seconds signaux (S2) qui désignent des instructions de commande pour la commande du fonctionnement d'équipements, et que
- la première unité de commande (CDC) et/ou la seconde unité de commande (P) est/sont configuré(s) de telle manière que les troisièmes signaux (S3) sont générés en fonction des premiers signaux (S1) et/ou en fonction des seconds signaux (S2).

10. Procédé selon la revendication 9, **caractérisé par le fait que** la seconde unité de commande (P) est disposée de manière hiérarchique sous la première unité de commande (CDC).

11. Procédé selon la revendication 9 ou 10, **caractérisé par le fait que** le système de communication présente au moins une antenne radio (ANT) et que des troisièmes composants (E3) sont des appareils récepteurs de radio (TR) et/ou des appareils récepteurs de télévision (TV).

12. Procédé selon l'une des revendications 9 à 11, **caractérisé par le fait que** la première unité de commande (CDC) et/ou la seconde unité de commande (P) commande(nt) les appareils récepteurs de radio (TR) et/ou les appareils récepteurs de télévision (TV) en fonction des premiers signaux (S1) et/ou en fonction des seconds signaux (S2).

13. Procédé selon l'une des revendications 9 à 12, **caractérisé par le fait que** la seconde unité de commande (P) transmet à la première unité de commande (CDC) des premiers signaux (S1) et/ou des seconds signaux (S2) et/ou des troisièmes signaux (S3) et/ou une première information (I1), qui est déduite des premiers signaux (S1) et/ou des seconds signaux (S2) et/ou des troisièmes signaux (S3).

14. Procédé selon l'une des revendications 9 à 13, **caractérisé par le fait que** la première unité de commande (CDC) transmet à la seconde unité de commande (P) du système de communication les premiers signaux (S1) et/ou les seconds signaux (S2) et/ou les troisièmes signaux (S3) et/ou une seconde information (12), qui est déduite des premiers signaux (S1) et/ou des seconds signaux (S2) et/ou des troisièmes signaux (S3) et ou de la première information (I1).

15. Procédé selon l'une des revendications 9 à 14, **caractérisé par le fait que** l'exécution de premiers processus est attribuée à la première unité de commande, que l'exécution de seconds processus est attribuée à la seconde unité de commande, que la première unité de commande (CDC), en cas de défaillance de la première unité de commande (P), exécute au moins une partie des seconds processus, et/ou que la seconde unité de commande (P) exécute, en cas de défaillance de la première unité de commande (CDC), au moins une partie des premiers processus.

16. Procédé selon l'une des revendications 9 à 15, **caractérisé par le fait que** la seconde unité de commande (P) est attribuée à une partie de bâtiment, en particulier à une unité d'habitation, de bureau ou commerciale, que les premiers composants (E1), en particulier des capteurs, qui sont reliés à la seconde unité de commande (P) et/ou à la première unité de commande (CDC), sont disposés dans la partie de bâtiment, en particulier dans l'unité d'habitation, de bureau ou commerciale, que les appareils récepteurs de radio (TR) et/ou les appareils récepteurs de télévision (TV) sont reliés à la seconde unité de commande (P), et que la seconde unité de commande (P) commande les appareils récepteurs de radio (TR) et/ou les appareils récepteurs de télévision (TV).
